# EUROPEAN PATENT SPECIFICATION

(11) **EP 0 361 706 B1**
(45) Date of publication and mention of the grant of the patent: **14.12.1994**
(21) Application number: 89309000.1
(22) Date of filing: 06.09.1989
(51) Int. Cl.: H05B 41/29

(54) **Lighting device**
Beleuchtungsvorrichtung
Dispositif d'éclairage

(30) Priority: 08.09.1988 JP 223538/88
(43) Date of publication of application: 04.04.1990
(73) Proprietor: Hayashibara, Ken, Okayama-shi Okayama (JP)
(72) Inventor: Masaki, Kazumi, Suita-shi Osaka (JP)
(74) Representative: Palmer, Roger

(56) References cited:
- EP-A- 0 121 917
- DE-C- 3 001 755
- JP-A- 6 326 909
- JP-A- 6 388 792
- JP-A-61 193 398
- JP-A-62 185 516
- JP-A-63 136 492

## Description

### Background of the Invention

### 1. Field of the invention

The present invention relates to a lighting device using krypton lamp as the light source, in particular, to a lighting device wherein krypton lamp is lighted by energizing a voltage exceeding its rating.

### 2. Description of the prior art

Recently, the number of school children with pseudo-myopia and workers with eyestrain are steadily increasing. This would be due to long-time TV and fine print watching under inappropriate lighting, as well as to increasing VDT task. Recent tendency prefers lighting devices which makes a person to recognize the color of an article as it really is, and repeated discussions have been focused on color rendering properties of lighting.

Light sources which have been extensively used in lighting devices are fluorescent and incandescent lamps. Fluorescent lamp has the merit that its relatively high total flux provides a bright lighting, as well as having the demerits that its flicker tends to cause eyestrain, and that the unbalance between total flux and color temperature deteriorates the color rendering properties to make articles look paler than they really are.

Although incandescent lamp is superior to fluorescent lamp because the well balance between total flux and color temperature achieves satisfiable color rendering properties, incandescent lamp has the demerit that it is generally low in total flux and this tends to cause eyestrain when used in lighting for long time.

In order to overcome these drawbacks of conventional lighting device, the present inventor investigated incandescent lamps having superior color rendering properties. As the result, the present inventor found that a light obtained by applying to an incandescent lamp a voltage exceedings its rating attains a color temperature approximately the same as that of early morning sunlight (about 3,000K) which is comfortable to the eyes, as well as that such a light is suitable for general lighting. The present inventor disclosed these in Japanese Patent Laid-Opens No.193,398/86, No.185,516/87, No.26,909/88 and No.88,792/88.

The most popularly used incandescent lamp is argon lamp wherein argon gas is enclosed as the filling gas. Although argon lamp achieves a service life of about 1,000 hours when lighted by energizing the rated voltage, energization of an overvoltage extremely shortens the service life even when the overvoltage is dc.

In GB2160723 a surge current suppressing adapter for an incandescent lamp is described which may be used to energise the incandescent lamp with a voltage which exceeds the rated voltage of the lamp. In this way, it is suggested, an increased luminous intensity can be achieved.

In view of the foregoing, the present inventor investigated various light sources which emit long time a natural light having a color temperature of about 2,900K or higher, desirably, in the range of about 2,950 to about 3,050K, as well as having superior color rendering properties.

As the result, the present inventor found that krypton lamp emits a natural light having both color temperature of about 2,900K or higher, desirably, in the range of about 2,950 to about 3,050K and superior color rendering properties when lighted by energizing a voltage exceeding the rating, desirably, exceeding 110% but not exceeding 150% thereof, as well as that such a light is suitable for general lighting.

More particularly, the present invention provides a lighting device comprising an incandescent lamp connected to the output terminal of a power source, the power source, when in use, supplying to the incandescent lamp a voltage which exceeds the voltage rating of the incandescent lamp characterised in that the incandescent lamp is a krypton lamp (KL) having a rated wattage of between 25W and 150W which is of the type which achieves a color temperature of 2,900K or higher when supplied with a voltage exceeding the voltage rating of the krypton lamp.

According, for example, to Akio Ogasawara, Shomei Gakkai-shi (Journal of Light and Visual Environment), Vol.66, No.2, pp.49-52 (1982), krypton lamp is slightly higher in total flux and longer in service life than argon lamp, i.e. 2,000 hours to 1,000 hours. Both lamps are, however, relatively low in color temperature, i.e. up to 2,850K, which is insufficiently low for use in lighting.

The present invention uses krypton lamp as the light source, which is allowed to emit long time a natural light having both color temperature of about 2,900K or higher, desirably, in the range of about 2,950 to about 3,050K and superior color rendering properties.

The wording "krypton lamp" as referred to in the invention means incandescent tungstein filament lamp wherein the filling gas comprises or consists of krypton gas. Any krypton lamp can be used in the invention regardless of their rated voltage, efficiency and shape, provided that it emits a continuous light having a color temperature of about 2,900K or higher, desirably, in the range of about 2,950 to about 3,050K when energized by a voltage exceeding 110% of the rating but not exceeding 150% thereof. In view of color rendering properties, it is desirable to choose a voltage which attains a total flux of about 1,000 lumens or higher, desirably, in the range of about 1,050 to about 1,200 lumens. Such a krypton lamp is a commercialized krypton lamp with a rated wattage of 25 to 150W, or that which is specially designed and prepared to give a desired rated voltage, rated wattage, efficiency and shape.

The power source to supply to krypton lamp a voltage exceeding its rating is that which can supply to a krypton lamp an ac or a dc voltage exceeding its rating, desirably, exceeding 110% but not exceeding 150% thereof when connected with one or more krypton lamps to output terminal(s). Such power source can be stabilized with an electric circuitry.

To supply to a krypton lamp an ac voltage exceeding its rating, for example, an ac or a dc voltage from commercial ac line, generator or battery is controlled with a suitable means such as transformer and power converter into a voltage exceeding the rating, desirably, exceeding 110% but not exceeding 150% thereof, and then applied to the krypton lamp: For example, a lamp lighting device disclosed in Japanese Patent Laid-Open No. 136,492/88 by the present inventor is suitable for such power source.

To supply to a krypton lamp a dc voltage exceeding its rating, besides using battery, an ac voltage, for example, from commercial ac line or generator is rectified and smoothed with a rectifier circuit bearing a smoothing means, and the obtained dc voltage exceeding the rating but not exceeding 150% thereof is supplied to the krypton lamp: For example, lamp lighting devices disclosed in Japanese Patent Laid-Opens No. 193,398/86, No. 185,516/87 and No.26,909/88 by the present inventor are extremely suitable for such power source.

Further, an ac voltage, for example, from commercial ac line or generator is rectified and smoothed with a rectifier circuit bearing a smoothing means, and the obtained dc voltage is fed to an inverter circuit into a high-frequency voltage which is then applied intact to a krypton lamp, or converted with a rectifier circuit into a dc voltage exceeding the rating, desirably, exceeding 110% but not exceeding 150% thereof prior to application to the krypton lamp.

Among the above described methods, the method wherein an ac voltage is converted with a rectifier circuit bearing a smoothing means into a dc voltage which is then applied to krypton lamp is superior to the other two methods because of the facts that the power source for this method can be so simplified that a voltage exceeding the rating but not exceeding 150% thereof can be easily obtained only by controlling the capacitance of the smoothing means; and that the obtained light is flickerless and much more natural and closer to the sunlight than that obtained by lighting krypton lamp with an ac voltage exceeding the rating.

The light obtained in this way, has a color temperature of about 2,900K or higher, desirably, in the range of about 2,950 to about 3,050K, and the service life at this time is usually about 200 hours or longer which causes no problem when practically used. Especially, the present inventor found that, in case wherein krypton lamp is lighted by energizing a dc voltage obtained by rectifying and smoothing an ac voltage with a rectifier circuit which bears a smoothing means, one can safely obtain with krypton lamp a flickerless natural light having a color temperature of about 2,950K or higher, desirably, in the range of about 2,950 to about 3,050K, over a time period of about 400 hours or longer, desirably, in the range of about 500 to about 2,000 hours by providing an arc discharge current-limiting circuit and a rush current-limiting circuit respectively at an ac terminal and a dc terminal of the rectifier circuit. While in case wherein argon lamp is applied with a voltage exceeding its rating to obtain a light having the same color temperature, the service life is extremely shortened to about 50 hours even when the voltage is dc.

As described above, krypton lamp achieves a service life of about 200 hours or longer which reaches up to about 4-folds of that attained by supplying to argon lamp a voltage exceeding its rating to emit a light having a color temperature of about 2,900K or higher. Such a service life is about 2-folds or much longer than that expected from the inherent lives of krypton and argon lamps (2,000 and 1,000 hours respectively). When a plurality of krypton lamps are successively changed and lighted at prescribed time intervals, the life of one krypton lamp is much more prolonged than in the case of lighting one krypton lamp in continuous manner.

Accordingly, the lighting device according to the invention is advantageously usable as table and desk lightings, for example, adjustable lamp, desk lamp, hurricane lamp, table lamp and mini lamp; indoor and outdoor lightings, for example, ceiling fixture, wall fixture, pendant, chandelier, swag lamp and floor lamp, garden lamp and porch for the lighting of study room, children's room, bed room, living room, dining room, kitchen, toilet room, washroom, bath room, passage, stairs, balcony and porch in detached house, apartment house and multiple house, as well as for lighting of reading room, schoolroom, hall, lobby, waiting room, treating room, control room, office room, drawing room, laboratory, lounge, guest room, clerk room, cooking room, operating room and cultivating room in facilities such as library, school, studio, beauty salon, hospital, factory, office, "ryokan (Japanese-style hotel)", hotel, restaurant, banquet hall, wedding hall, conference hall, store, shop, supermarket, department store, art museum, museum, concert hall, hall, airplane, vehicle, pool, gymnasium, sports ground, poultry farm, fish farm and plant factory.

One or more lighting units prepared according to the invention can be subjected to a lighting pattern control, time schedule control, daylight interlocking control, wall switch control, centralized control and/or dimming control by appropriately locating the lighting unit(s) in the above described house and facilities, and subjecting the lighting unit(s) to a lighting control system using dimming and switching circuits, for example, wire control systems such as individual wiring system, personal wiring multiplex system, telephone line system, power line carrier system and optical fiber system and wireless control systems such as electric wave control system, light control system, ultrasonic control system and acoustic control system. Particularly in household lighting, one or more lighting devices of the present invention can be totally controlled together with other electric equipments by incorporating the lighting device(s) into a home bus system.

In addition, since the present lighting device provides a natural light which is close to early morning sublight and exhibits remarkable effects in the prevention and treatment of diseases, for example, pseudomyopia, asthenopia and depression and also in the improvement of growth and productivity of animals and plants, the lighting device can be advantageously used to practice physical therapy at home and infirmaries such as hospital and clinic, as well as a lighting device for farms and factories such as poultry farm, fish farm and plant factory.

The light obtained by lighting krypton lamp by energizing a voltage exceeding its rating is rich in infrared component, in particular, a far-red component with a wavelength of 25 to 1,000 microns.

The far-red component has an activity of accelerating the perspiration, oxygen intake and blood circulation in animals to promote or improve their metabolism, lowering of blood pressure and blood sugar, excretion of metabolic products, relieving of obesity and rehabilitation, as well as having an activity of relieving inflammatory pains and spasms.

Accordingly, the lighting device of the invention exhibits remarkable effects in the relaxation of myonic tonus by stiff shoulder and myalgia; in the relieving of spasms and dorsal pains by trauma, burn, rheumatism, arthritis, lambago, neuralgia, extermal otitis, tymanitis, nasosinusitis, tonsillitis, pharyngitis, laryngitis, throaty voice, and visceral diseases; and in the prevention and treatment of geriatric diseases such as cancer, hepatitis and hepatocirrhosis when equipped with a krypton lamp using a lead-free or low lead content glass bulb for higher infrared transmission. Such lighting device can be advantageously used to practice physical therapy at home and infirmaries such as hospital and clinic.

Further, since a light rich in infrared exhibits a remarkable germicidal activity on microorganisms, as well as accelerating the growth of plants, the present lighting device can be advantageously used as a germicidal lamp, as well as a lighting for cultivating rooms such as plant factory.

### Description of the Preferred Embodiments

The present invention will be further explained with reference to the accompanying drawings, in which:
FIG.1 is a block diagram of a lighting device according to the invention;
FIG.2 is a block diagram of a lighting system using lighting units according to the invention;
FIG.3 is an electric circuit of an embodiment according to the invention;
FIG.4 is an electric circuit of another embodiment according to the invention; and
FIG.5 is an electric circuit of still another embodiment according to the invention.

Throughout the figures, reference numeral (1) designates arc discharge current-limiting circuit; (2), rush current-limiting circuit; (3), lighting control device; (4), inverter circuit; D, rectifier diode; KL, krypton lamp; AC, ac power source; SW, switch; R, resistor; C, capacitor; T, transformer; Tr, transistor; L, inductor or winding; Q, thyristor; Z, zener diode; Th, thermistor; U, lighting unit; and F, fuse.

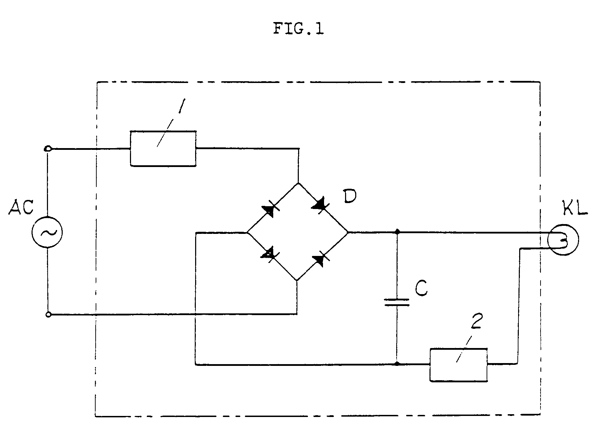

Now referring to FIG. 1, a rectifier circuit comprising a bridge rectifier D and a smoothing capacitor C is connected to an ac terminal of an ac source AC through an arc discharge current-limiting circuit (1), while a krypton lamp KL is connected with a dc terminal of the bridge circuit D through a rush current-limiting circuit (2).

The arc discharge current-limiting circuit (1), usually comprising an inductor, capacitor and/or resistor, is to limit an arc discharge current which may occur upon burnout of lamp filament, as well as to stop the arc discharge per se. Such an arc discharge usually occurs in short-circuit manner to arise in the main current circuit a continuous current surge of up to 200 amperes which has a possibility of greatly damaging circuits elements such as rectifier and thyristor. The inductance, capacitance and resistance of the inductor, capacitor and resistor used in the arc discharge current-limiting circuit (1) are set in such manner that, when the main current circuit is in stationary state, they cause no substantial voltage drop at the ac terminal of the rectifier D, but effectively limits an arc discharge current to suspend the arc discharge if such an arc discharge occurs. In view of heat generation during operation, inductor is the most desirable element which is used to compose the arc discharge current-limiting circuit (1). An inductor of coreless- or core-type such as winding iron core-type and laminating iron-type can be used as the inductor, as long as it limits arc discharge current when connected with the ac terminal of the rectifier circuit bearing a smoothing capacitor C. The inductance of such inductor is chosen in such manner that the resonance circuit formed together with the smoothing capacitor C advances the phase difference between the voltage and current components in arc discharge current, in other words, decreases its effective power. The use of an inductor with a relatively low dc resistance results in a less heat generation by the inductor per se, as well as in an effective limitation of arc discharge current. For example, in the case of lighting a krypton lamp, rated voltage of 100 to 110 volts, rated wattage of 40 to 60 watts, with a dc voltage of 115 to 130 volts, a desirable inductance lies in the range of about 1 to about 10 millihenries when the capacitance of the smoothing capacitor C is about 30 to about 100 microfarads. The arc discharge current-limiting circuit (1) also limits switch-on rush currents into krypton lamp and smoothing current which will be described hereinafter.

The filament resistance of krypton lamp at ambient temperature is several tenth parts of that in incandescent state. With this reason, the application of a voltage exceeding the rating of krypton lamp results in a rush current which may reach up to several folds of stationary current or higher to accelerate the vaporization and burnout of the lamp filament. The rush current-limiting circuit (2) is to limit such a rush current and also to prevent the shortening of life due to the rush current. The rush current-limiting circuit (2) usually comprises a current limiting means such as resistor which is connected in series with krypton lamp, a thyristor having a main current path connected in parallel with the current limiting means, and a triggering circuit which delays the conduction of the thyristor by a prescribed time after switch-on. The resistance of the current limiting means is chosen in such manner that its combined resistance with the filament at ambient temperature is approximately the same as the filament resistance in incandescent state. With this arrangement, the current limiting means is left connected in series with krypton lamp over the prescribed time to limit possible rush current and also to preheat the filament. After a lapse of the prescribed time, the thyristor is triggered to bypass the current limiting means to supply to krypton lamp a voltage exceeding its rating. Thus, the rush current into krypton lamp can be extremely reduced or even eliminated.

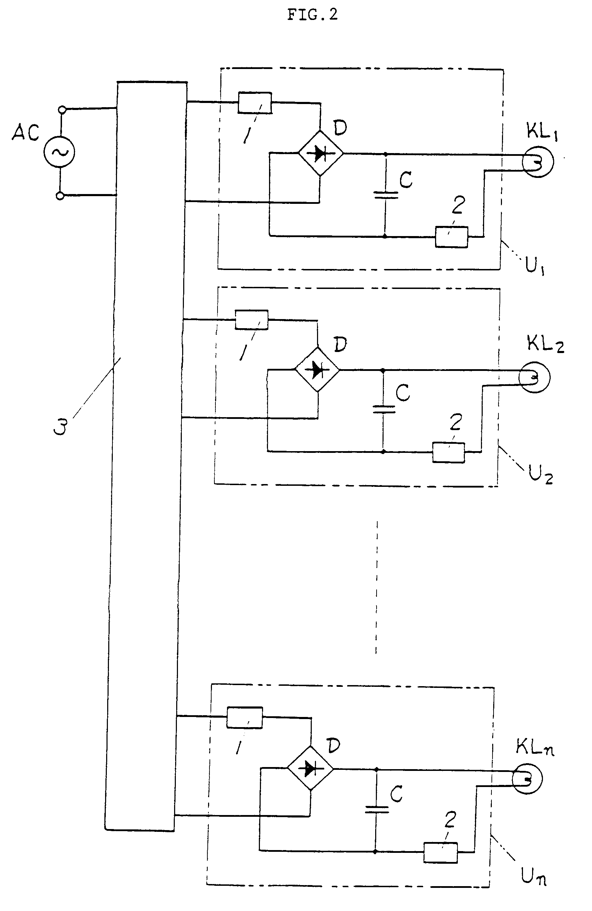

FIG.2 is an example of a lighting system wherein a plurality of lighting units as shown in FIG.1 are controlled by a lighting control device using, for example, dimming and switching circuits.

More particularly, in this lighting system, a plurality of lighting units U₁, U₂ ... Uₙ respectively comprising a rectifier circuit bearing a smoothing circuit as shown in FIG. 1, an arc discharge current-limiting circuit, and a rush current-limiting circuit are equipped with krypton lamps KL₁, KL₂ ... KLₙ having a desired rated wattage, and connected with an ac source AC through a lighting control device (3) which bears, for example, dimming and switching circuits.

The lighting control device (3) and the power sources and krypton lamps in respective lighting units can be located as follows: For example, the lighting control device (3) and power sources are located at the same place, while the krypton lamps are located at desired places in houses and facilities such as library, school, studio, beauty salon, hospital, factory, office, "ryokan", hotel, restaurant, banquet hall, wedding hall, conference hall, store, shop, supermarket, department store, art museum, museum, concert hall, hall, airplane, vehicle, pool, gymnasium, poultry farm, fish farm and plant factory. Alternatively, the lighting control device (3) is located at an appropriate place in houses and facilities, while a plurality of units containing a power source and a krypton lamp are located at desired places in the houses and facilities.

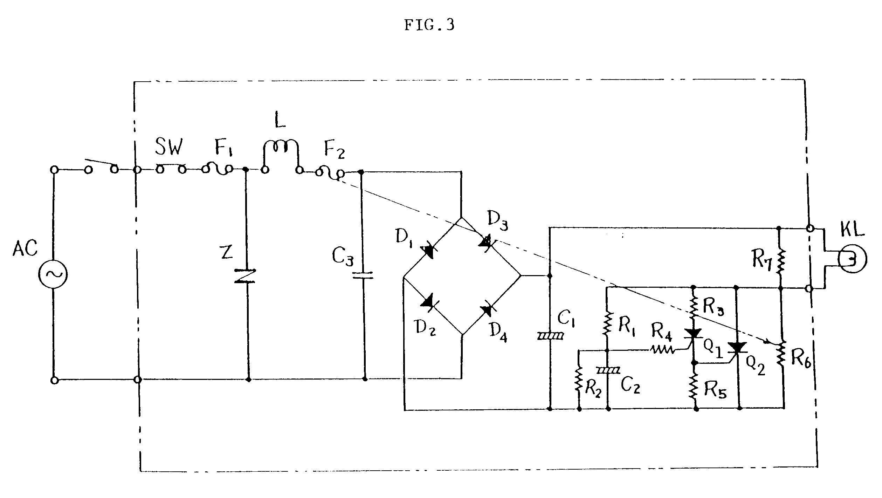

FIG.3 shows an electric circuit of the lighting device or unit as shown in FIG.1 or 2. In FIG.3, an ac terminal of a bridge rectifier consisting of rectifier diodes D₁, D₂, D₃ and D₄ is connected with a power source AC through a power switch SW, fuses F₁ and F₂ and inductor L, while a dc terminal of the bridge rectifier is connected with a smoothing capacitor C₁ and a krypton lamp KL through a triggering circuit consisting of resistors R₁, R₂, R₃, R₄ and R₅, a capacitor C₂ and thyristors Q₁ and Q₂, and through a resistor R₆ as rush current-limiting circuit. A capacitor C₃ and a zener diode Z both connected with the ac terminal of the bridge rectifier are to absorb pulse voltages which may occur at the ac terminal to stabilize its input voltage. The resistor R₆ and fuse F₂ are arranged to operate in association so that, if the temperature of the resistor R₆ increases with an abnormality, the fuse F₂ melts off to automatically break the main current circuit.

The operation of this example will be explained hereinafter. When the power switch SW is closed, an ac current from the ac source AC is subjected to full-wave rectification by the bridge rectifier and smoothed by the smoothing capacitor C₁, and the dc voltage across the smoothing capacitor C₁ is applied to the series circuit of the krypton lamp KL and resistor R₆.

While charging of the capacitor C₂ in the triggering circuit is initiated immediately after switch-on of the power switch SW, and, after a lapse of the time as determined by the time constant of the resistor R₄ and capacitor C₂, the voltage across the capacitor C₂ is applied to a gate of the thyristor Q₁ to bring it into conduction. The conduction current through the thyristor Q₁ is applied in turn to a gate of the thyristor Q₂ to bring it conduction. Conduction of the thyristor Q₂ bypasses the resistor R₆ connected in parallel with a main current path of the thyristor Q₂. Thus, a prescribed voltage is applied to the krypton lamp KL.

Since the filament resistance of the krypton lamp KL immediately after switch-on of the power switch SW is several tenth parts of that in incandescent state, shortening of the life due to rush current can be prevented by setting the resistor R₆ in such manner that its combined resistance with the filament is approximately equal to its resistance in incandescent state. In this case, by setting the above described time constant long enough to preheat the filament of the krypton lamp KL, the rush current into the krypton lamp KL can be substantially eliminated. Furthermore, this example has the merits that the thyristor Q₂ can be triggered with a relatively small current because in this example two thyristors are used in cascade connection, and that, even when the ambient temperature greatly varies, the triggering circuit is much more surely operated than in the case of using only one thyristor.

If the filament of the krypton lamp KL is burn out, an arc discharge occurs between the resultant filament gap and a sudden arc discharge current may flow into the main current circuit. The inductor L provided at the ac terminal of the bridge rectifier effectively makes a loss on any current surge into the main current circuit to suspend such an arc discharge current and also to stop the arc discharge per se. If the arc discharge restores, it is suppressed again by the inductor L and never continues even after the filament gap is enlarged. Furthermore, if the power switch SW is still closed after the arc discharge is stopped, the arc discharge never restore because the filament has been burn out.

Since this example is arranged in this way, a flickerless natural light having a color temperature of about 2,900K or higher, desirably, in the range of about 2,950 to about 3,050K and superior color rendering properties can be obtained with a krypton lamp by energizing a dc voltage exceeding its rating, desirably, exceeding 110% but not exceeding 150% thereof.

Furthermore, this example can be safely used because, if burnout of filament produces an arc discharge, it effectively limits the current surge due to the arc discharge.

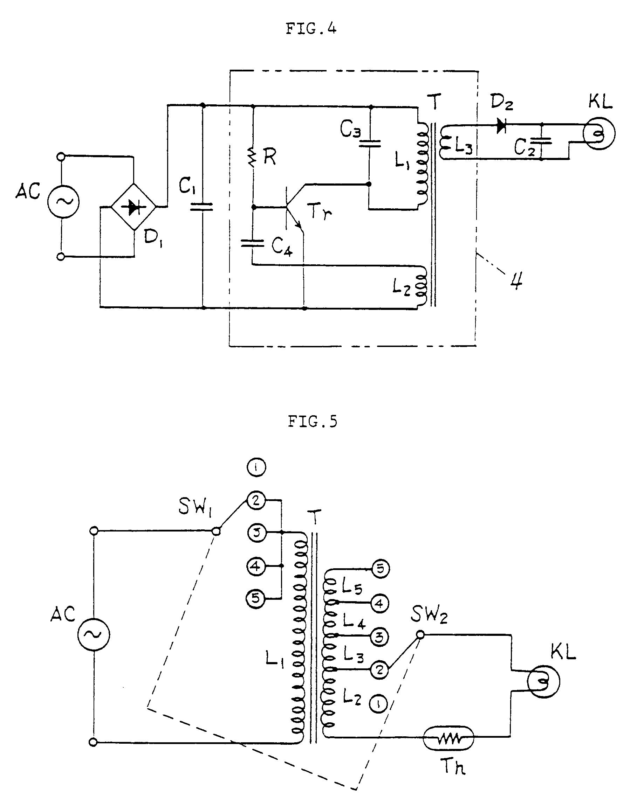

FIG.4 is an electric circuit of another embodiment according to the invention using an inverter circuit.

An ac terminal of a bridge rectifier D₁ is connected with an ac source AC, while a dc terminal of the bridge rectifier D₁ is connected with a smoothing capacitor C₁. An input terminal of an inverter circuit (4) generating a high-frequency current is connected between both ends of the capacitor C₁, while an output terminal of the inverter circuit (4) is connected through a rectifier diode D₂ with an integration circuit comprising a capacitor C₂. A krypton lamp KL is connected between both ends of the capacitor C₂. In the inverter circuit (4) is provided an inverter transformer T and a transistor Tr, and a capacitor C₃ is connected in parallel with a primary winding L₁ of the inverter transformer T. Both ends of the capacitor C₃ are connected with a positive end of the smoothing capacitor C₁ and a collector of the transistor Tr. One end of a base winding L₂ of the inverter transformer T is connected with a base of the transistor Tr through a capacitor C₄, while the other end of the base winding L₂ is connected with a negative end of the smoothing capacitor C₁. The base of the transistor Tr is also connected with a positive end of the smoothing capacitor C₁ through a resistor R. A second winding L₃ of the inverter transformer T provides an output terminal of the inverter circuit (4), and particular circuit constants of the inverter circuit (4) and capacitor C₂ are chosen in such manner that the voltage across the krypton lamp KL exceeds the effective voltage of the ac source AC, desirably, exceeding 110% but not exceeding 150% thereof, as well as that the current across the filament is, desirably, in the range of 110% of the rating but not exceeding 150% thereof.

Now explaining the operation of this example, when the ac power source AC is closed, the ac current therefrom is subjected to full-wave rectification by the bridge rectifier D₁, and smoothed by the smoothing capacitor C₁ into a pulsating or a dc current which is then supplied to the inverter circuit (4). This induces the oscillation of the inverter circuit (4) to output a high-frequency voltage at the secondary winding L₃ of the inverter transformer T. The high-frequency voltage is subjected to half-wave rectification by the diode D₂, integrated by the capacitor C₂, and supplied to the krypton lamp KL.

Since this example is arranged in this way, a natural light having a color temperature of about 2,900K or higher, desirably, in the range of about 2,950 to about 3,050K and superior color rendering properties can be obtained with a krypton lamp over a long period of time by lighting it with a voltage exceeding its rating, desirably, exceeding 110% but not exceeding 150% thereof.

FIG.5 is an electric circuit of still another embodiment according to the invention, wherein krypton lamp is lighted by energizing an ac voltage exceeding the rating.

In this example, there is provided secondary windings L₂, L₃, L₄ and L₅ having respective winding ratio, for example, of 100:12, 100:13, 100:14 and 100:15 against a primary winding L₁, and a power switch SW₁ is provided in such manner that it can be operated in association with a switch SW₂ which is used to switch the secondary windings. Thus, the voltage across the krypton lamp KL can be freely changed in the range of 12 to 15 volts. Furthermore, a thermistor Th is provided in the secondary circuit of the transformer T so that rush current due to switch-on of the power switch SW₁ is limited by utilizing the property of thermistor that its electric resistance lowers as the ambient temperature increases.

Since this example is arranged in this way, a natural light having a slight flicker but having a color temperature of about 2,900K or higher, desirably, in the range of about 2,950 to about 3,050K can be obtained with a krypton lamp over a long period of time by lighting it with an ac voltage exceeding its rating, desirably, exceeding 110% but not exceeding 150% thereof.

Furthermore, this example can be simplified because the transformer T also limits rush current due to switch-on of the power switch SW₁, and the attachment of the transformer T to the bottom of the lighting device helps it to stabilizes its settlement.

Although in FIG.5 only one krypton lamp is attached to the lighting device, of course, a plurality of krypton lamps can be simultaneously lighted with one lighting device when the total wattage of the krypton lamps are within the power capacity of the transformer T.

As described above, since in the invention krypton lamp is lighted by energizing a voltage exceeding its rating, a natural light having a color temperature of about 2,900K or higher and superior color rendering properties which are appropriate to general lighting can be obtained with krypton lamp for long time.

Furthermore, the present lighting device attains a flickerless and less eyestrain-causative light when lighted by energizing a dc voltage exceeding the rating.

In addition, in the case of lighting krypton lamp with a dc voltage obtained by rectifying an ac voltage with a rectifier circuit bearing a smoothing means, one krypton lamp can be used for longer time by providing an arc discharge current-limiting circuit and a rush current-limiting circuit respectively at an ac terminal and a dc terminal of the rectifier circuit.

Accordingly, the present lighting device can be advantageously used for lighting of various houses and facilities such as library, school, studio, beauty salon, hospital, factory, office, "rhyokan", hotel, restaurant, banquet hall, wedding hall, conference hall, store, shop, supermarket, department store, art museum, museum, concert hall, hall, airplane, vehicle, pool, gymnasium, poultry farm, fish farm and plant factory.

Further, since the present lighting device provides a natural light close to morning sunlight which exhibits remarkable effects in the prevention and treatment of diseases, for example, pseudomyoxia, asthenopia and depression, as well as in the improvement of growth and productivity of animals and plants, the present lighting device can be advantageously used as luminare for farms and factories such as poultry farm, fish farm and plant factory.

The present invention attaining such remarkable effects would greatly contribute to the art.

## Claims

1. A lighting device comprising an incandescent lamp connected to the output terminal of a power source, the power source, when in use, supplying to the incandescent lamp a voltage which exceeds the voltage rating of the incandescent lamp characterised in that the incandescent lamp is a krypton lamp (KL) having a rated wattage of between 25W and 150W which is of the type which achieves a color temperature of 2,900K or higher when supplied with a voltage exceeding the voltage rating of the krypton lamp.

2. A lighting device as claimed in claim 1, characterised in that the krypton lamp is supplied with a voltage which exceeds the rating of the krypton lamp by between 110% and 150%.

3. A lighting device as claimed in claim 2, characterised in that the krypton lamp provides a total flux of 1,000 lumens or higher when in use.

4. A lighting device as claimed in any one of the preceding claims, characterised in that the power source is a dc power source.

5. A lighting device as claimed in claim 4, characterised in that the power source supplies a dc voltage obtained by rectifying and smoothing an ac voltage with a rectifier circuit including smoothing means.

6. A lighting device as claimed in claim 5, characterised in that an arc discharge current-limiting circuit and a rush current-limiting circuit are provided respectively at an ac terminal and a dc terminal of the power source.

7. A lighting device as claimed in any one of the preceding claims which provides a service life of 400 hours or longer.

8. The lighting device as claimed in any one of the preceding claims when used as an indoor light.

## Patentansprüche

1. Beleuchtungsvorrichtung mit einer Glühlampe, die mit der Ausgangsklemme einer Spannungsquelle verbunden ist, wobei die Spannungsquelle bei Betrieb an die Glühlampe eine Spannung anlegt, welche die Nennspannung der Glühlampe übersteigt, dadurch gekennzeichnet, daß die Glühlampe eine Kryptonlampe (KL) mit einer Nennleistung zwischen 25 W und 150 W ist, wobei diese Lampenart eine Farbtemperatur von 2900°K oder darüber erreicht, wenn an sie eine die Nennspannung der Kryptonlampe übersteigende Spannung angelegt wird.

2. Beleuchtungsvorrichtung nach Anspruch 1, dadurch gekennzeichnet, daß an die Kryptonlampe eine Spannung angelegt wird, welche die Nennspannung der Kryptonlampe um zwischen 110 % und 150 % übersteigt.

3. Beleuchtungsvorrichtung nach Anspruch 2, dadurch gekennzeichnet, daß die Kryptonlampe bei Betrieb einen Gesamtlichtstrom von 1000 Lumen oder darüber liefert.

4. Beleuchtungsvorrichtung nach einem der vorangehenden Ansprüche, dadurch gekennzeichnet, daß die Spannungsquelle eine Gleichspannungsquelle ist.

5. Beleuchtungsvorrichtung nach Anspruch 4, dadurch gekennzeichnet, daß die Spannungsquelle eine Gleichspannung liefert, welche durch Gleichrichten und Glätten einer Wechselspannung mit einer Gleichrichterschaltung einschließlich einer Glätteinrichtung erhalten wird.

6. Beleuchtungsvorrichtung nach Anspruch 5, dadurch gekennzeichnet, daß eine Bogenentladungs-Strombegrenzerschaltung und eine Spitzenstrom-Begrenzerschaltung jeweils an einem Wechselstromanschluß und an einem Gleichstromanschluß der Spannungsquelle vorgesehen sind.

7. Beleuchtungsvorrichtung nach einem der vorangehenden Ansprüche, welche eine Lebensdauer von 400 Stunden oder darüber aufweist.

8. Verwendung der Beleuchtungsvorrichtung nach einem der vorangehenden Ansprüche als Innenbeleuchtung.

## Revendications

1. Dispositif d'éclairage comprenant une lampe à incandescence reliée à une borne de sortie d'une source d'alimentation, la source d'alimentation fournissant, lorsqu'elle est utilisée, à la lampe à incandescence une tension qui dépasse la tension nominale de la lampe à incandescence, caractérisé en ce que la lampe à incandescence est une lampe au krypton (KL) ayant une puissance nominale située entre 25 W et 150 W, et en ce qu'elle est du type donnant une température de couleur de 2.900 K ou davantage lorsqu'elle reçoit une tension dépassant la tension nominale de la lampe au krypton.

2. Dispositif d'éclairage selon la revendication 1, caractérisé en ce que la lampe au krypton reçoit une tension qui dépasse de 110 % à 150 % la tension nominale de la lampe au krypton.

3. Dispositif d'éclairage selon la revendication 2, caractérisé en ce que la lampe au krypton fournit en service un flux total supérieur ou égal à 1.000 lumens.

4. Dispositif d'éclairage selon l'une quelconque des revendications précédentes, caractérisé en ce que la source d'alimentation est une source d'alimentation continue.

5. Dispositif d'éclairage selon la revendication 4, caractérisé en ce que la source d'alimentation fournit une tension continue, obtenue par redressement et lissage d'une tension alternative, au moyen d'un circuit redresseur comprenant des moyens de lissage.

6. Dispositif d'éclairage selon la revendication 5, caractérisé en ce qu'il comprend un circuit limiteur de courant de décharge d'arc et un circuit limiteur de surintensité, respectivement au niveau d'une borne d'alimentation alternative et d'une borne d'alimentation continue de la source d'alimentation.

7. Dispositif d'éclairage selon l'une quelconque des revendications précédentes, assurant une durée de vie en service de 400 heures ou davantage.

8. Dispositif d'éclairage selon l'une quelconque des revendications précédentes, lorsqu'il est utilisé en tant qu'éclairage d'intérieur.
